(19) Europäisches Patentamt
European Patent Office
Office européen des brevets

(11) **EP 4 644 318 A1**

(12) **EUROPEAN PATENT APPLICATION**
published in accordance with Art. 153(4) EPC

(43) Date of publication:
**05.11.2025 Bulletin 2025/45**

(21) Application number: 23911965.4

(22) Date of filing: **22.12.2023**

(51) International Patent Classification (IPC):
*C01B 32/318* (2017.01)    *B01J 20/20* (2006.01)
*B01J 20/28* (2006.01)    *B01J 20/30* (2006.01)
*C01B 32/00* (2017.01)

(52) Cooperative Patent Classification (CPC):
B01J 20/20; B01J 20/28; B01J 20/30; C01B 32/00;
C01B 32/318

(86) International application number:
**PCT/JP2023/046104**

(87) International publication number:
**WO 2024/143185 (04.07.2024 Gazette 2024/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 28.12.2022 JP 2022211359
17.04.2023 JP 2023067483

(71) Applicant: **Sony Group Corporation**
**Tokyo 108-0075 (JP)**

(72) Inventors:
• **KAI Ayumi**
  **Atsugi-shi, Kanagawa 243-0014 (JP)**
• **TABATA Seiichiro**
  **Tokyo 108-0075 (JP)**
• **SHIROYAMA Masaya**
  **Tokyo 108-0075 (JP)**

(74) Representative: **D Young & Co LLP**
**3 Noble Street**
**London EC2V 7BQ (GB)**

(54) **POROUS CARBON MATERIAL MANUFACTURING METHOD, POROUS CARBON MATERIAL, ADSORBENT AND FIBER**

(57)    The present technology improves a porous carbon material that uses a material of plant origin as a raw material and a method of producing the same, and the main object of the present technology is to provide a technology capable of reducing the amount of a residual silicon component in a material when producing the porous carbon material that uses a material of plant origin as a raw material.

As a result of extensive research, the present inventors have found that it is useful to carbonize a material of plant origin and then perform acid or alkali treatment under pressurized conditions, and completed the method of producing a porous carbon material according to the present technology.

FIG.2

**Description**

Technical Field

The present technology relates to a method of producing a porous carbon material and the porous carbon material.

Background Art

In the past, a porous carbon material that uses a material of plant origin as a raw material and a method of producing the same have been known. For example, the following Patent Literature 1 discloses a method of producing a solidified porous carbon material, in which a material of plant origin is solidified, then carbonized at 400°C to 1400°C while being solidified, and then treated with an acid or alkali.

Citation List

Patent Literature

Patent Literature 1: WO2017/146044

Disclosure of Invention

Technical Problem

The present technology improves a porous carbon material that uses a material of plant origin as a raw material and a method of producing the same, and the main object of the present technology is to provide a technology capable of reducing the amount of a residual silicon component in a material when producing the porous carbon material that uses a material of plant origin as a raw material.

Solution to Problem

As a result of extensive research, the present inventors have found that it is useful to carbonize a material of plant origin and then perform acid or alkali treatment under pressurized conditions or solidification treatment after carbonizing or perform both of them.

That is, the present technology provides a method of producing a porous carbon material, including: carbonizing a material of plant origin at 400°C to 1400°C and then performing acid or alkali treatment under conditions of more than 0.1 MPa and not more than 25.0 MPa.

In the method of producing a porous carbon material according to the present technology, the acid or alkali treatment may be performed at 100°C to 450°C.

In the method of producing a porous carbon material according to the present technology, the carbonizing may be performed at 400°C to 900°C.

In the method of producing a porous carbon material according to the present technology, the acid or alkali treatment may be performed with one or more acids selected from fluorine compounds or one or more alkalis selected from alkali metal derivatives and alkaline earth metal derivatives, and when the acid or alkali treatment is performed with the one or more alkalis selected from alkali metal derivatives, a concentration of the one or more alkalis may be 1.0 mol/L or more.

In the method of producing a porous carbon material according to the present technology, a bulk density of the material of plant origin may be 0.2 g/cm$^3$ to 1.4 g/cm$^3$.

The method of producing a porous carbon material according to the present technology may further include performing activation treatment after the acid or alkali treatment.

Next, the method of producing a porous carbon material according to the present technology may further include performing solidification treatment on the material of plant origin after carbonizing the material of plant origin at 400°C to 1400°C.

In this case, the acid or alkali treatment may be performed after the carbonizing.
the carbonizing may be performed on the material of plant origin that has not been subjected to solidification treatment or the material of plant origin having a bulk density of 0.2 g/cm$^3$ or less.

In the method of producing a porous carbon material according to the present technology, when performing solidification treatment after carbonizing the material of plant origin at 400°C to 1400°C, the solidification treatment may be performed until the bulk density reaches 0.2 g/cm$^3$ or more.

The method of producing a porous carbon material according to the present technology is capable of providing a porous carbon material of plant origin, in which a value of a specific surface area measured by a nitrogen BET method is 10 $m^2/g$ or more, a volume of a pore measured by a BJH method and an MP method is 0.1 $cm^3/g$ or more, and a ratio of a KM value (KM value ratio) of a peak near 620 $cm^{-1}$ to an average value (average KM value) of Kubelka-Munk intensity values (KM values) at wavenumbers of 670 to 580 $cm^{-1}$ of an absorption spectrum obtained by Kubelka-Munk conversion of a relative diffuse reflectance indicating a ratio of diffuse reflected light to total reflected light of light incident on a material is 0.3 or less. Further, the method of producing a porous carbon material according to the present technology is capable of providing a porous carbon material of plant origin, in which a value of a specific surface area measured by a nitrogen BET method is 10 $m^2/g$ or more, a volume of a pore measured by a BJH method and an MP method is 0.1 $cm^3/g$ or more, and a ratio of a KM value (KM value ratio) of a peak near 810 $cm^{-1}$ to an average value (average KM value) of Kubelka-Munk intensity values (KM values) at wavenumbers of 870 to 730 $cm^{-1}$ of an absorption spectrum obtained by Kubelka-Munk conversion of a relative diffuse reflectance indicating a ratio of diffuse reflected light to total reflected light of light incident on a material is 0.3 or less.

Next, the present technology provides an adsorbent that uses the porous carbon material according to the present technology.

The present technology provides a fiber, including: the porous carbon material according to the present technology.

Brief Description of Drawings

[Fig. 1] Fig. 1 is a graph showing the results of evaluation of a porous carbon material precursor after carbonizing and before alkali treatment by FT-IR diffuse reflectance spectroscopy in the method of producing a porous carbon material according to the present technology.

[Fig. 2] Fig. 2 is a graph showing the results of evaluation of a porous carbon material according to the present technology by FT-IR diffuse reflectance spectroscopy.

Mode(s) for Carrying Out the Invention

Suitable embodiments for carrying out the present technology will be described below. The embodiments described below show examples of typical embodiments of the present technology, and any of the embodiments can be combined. Further, the scope of the present technology is not narrowly interpreted by these.

The method of producing a porous carbon material according to the present technology includes carbonizing a material of plant origin at 400°C to 1400°C and then performing acid or alkali treatment under conditions of more than 0.1 MPa and not more than 25.0 MPa.

In the present technology, the "porous carbon material" refers to a solid material that includes pores of various sizes and contains carbon. The specific surface area of the porous carbon material can be suitably measured by, for example, a nitrogen BET method. Further, the volume of the pore in the porous carbon material can be measured by, for example, a BJH method and an MP method.

In the method of producing a porous carbon material according to the present technology, a material of plant origin can be suitably used as a raw material of the porous carbon material.

The material of plant origin is not particularly limited as long as it is a material derived from a plant. However, for example, a plant containing a silicon component (referred to as a "silicic acid plant" or "silicon accumulating plant") can be suitably used. Here, examples of the silicon component contained in the plant include a silicon oxide such as silicon dioxide, silicon oxide, and a silicon oxide salt.

Examples of the silicic acid plant include, but not limited to, husks and straw from rice (rice plants), barley, wheat, rye, barnyard millet, foxtail millet, and the like, or reeds, wakame stems, coffee beans, tea straw, bagasse, and bamboo. Other examples include vascular plants, ferns, mosses, algae, and seaweeds that grow on land. Note that these materials may be used alone as a raw material, or a plurality of types of them may be used in combination. Further, there is no particular limitation on the shape and form of the material of plant origin. For example, the husk or straw itself may be used or a dried product may be used. Further, those that have been subjected to various processes such as fermentation, roasting, and extraction in the processing of food and beverages such as beer and alcoholic beverages may be used. In particular, from the viewpoint of recycling industrial waste, it is favorable to use the straw or husk after processing such as threshing. The straw and husk after processing can be easily obtained in large quantities from, for example, agricultural cooperatives, alcoholic beverage manufacturers, or food companies.

<Carbonization>

The method of producing a porous carbon material according to the present technology is capable of suitably generating a porous carbon material precursor by carbonizing a material of plant origin before performing acid or alkali treatment. Note that in the present technology, the "porous carbon material precursor" refers to a material of plant origin that has been subjected to carbonizing treatment before performing acid or alkali treatment thereon.

Here, the carbonization generally means performing heat treatment on an organic material (in the present technology, a material of plant origin) to convert it into a carbonaceous material (see, for example, JIS M0104-1984). Note that examples of the atmosphere for the carbonization include an atmosphere that is free of oxygen. Specific examples thereof include a vacuum atmosphere, an inert gas atmosphere such as a nitrogen gas and an argon gas, and an atmosphere in which the material of plant origin is in a kind of steam-baked state.

Examples of the heating rate up to the carbonization temperature include 1°C/min or more, favorably 3°C/min or more, more favorably 5°C/min or more, in the above atmosphere. Further, examples of the upper limit of the carbonization time include, but not limited to, 10 hours, favorably 7 hours, more favorably 5 hours. The lower limit of the carbonization time only needs to be a time that ensures that the material of plant origin is carbonized.

By setting the lower limit of the carbonization temperature to, for example, 400°C or more, favorably 450°C or more, still more favorably 500°C or more, it is possible to suitably convert the material of plant origin into a carbonaceous material.

As the upper limit of the carbonization temperature, for example, a temperature of 1400°C or less can be appropriately selected. Further, by carbonizing within this temperature range, it becomes a non-graphitizable carbon and it is possible to achieve excellent cycle characteristics when used in an electrochemical device. Note that from the viewpoint of reducing the amount of crystalline silica generated in the step of carbonization, by setting the upper limit of the carbonization temperature to 1000°C or less, favorably 900°C or less, still more favorably 850°C or less, it is expected that the generation of crystalline silica from the silicon component contained in the material of plant origin can be effectively suppressed.

The method of producing a porous carbon material according to the present technology may include, before the carbonization treatment, performing preliminary carbonization treatment in a vacuum atmosphere or an inert gas atmosphere similar to that in the carbonization treatment. The preliminary carbonization treatment is not an essential step in the method of producing a porous carbon material according to the present technology. However, by performing the preliminary carbonization treatment, it is expected that the tar components that can be generated during the next carbonization can be reduced or removed.

The treatment temperature, the heating rate, and the treatment time in the case of performing the preliminary carbonization treatment can be appropriately selected by referring to the conditions of carbonization described above.

In the present technology, the "crystalline silica" refers to a silicon oxide that is not "amorphous silica", specifically a silicon oxide having a three-dimensional regular repeating structure of silicon dioxide ($SiO_2$), and has crystal polymorphs such as quartz, cristobalite, tridymite, and coesite. Meanwhile, the "amorphous silica" is the same as the "crystalline silica" in that it is a material formed of silicon dioxide, but its molecules are arranged irregularly and it is a silicon oxide having no crystal structure. Examples thereof include silica gel, quartz glass, and diatomaceous earth.

In particular, since the "crystalline silica" is believed to be a causative agent of silicosis, the amount of crystalline silica contained in the porous carbon material is favorably smaller.

<Acid or alkali treatment>

In the method of producing a porous carbon material according to the present technology, by performing treatment with an acid or alkali after carbonizing the material of plant origin, it is possible to remove the silicon component contained in the porous carbon material precursor. Further, by removing the silicon component, it is possible to obtain a porous carbon material having a large value of a specific surface area measured by a nitrogen BET method and a large volume of a pore measured by a BJH method and an MP method.

Here, specific examples of the acid or alkali treatment include a method of immersing a porous carbon material precursor in an aqueous solution of an acid or alkali and a method of reacting a porous carbon material precursor with an acid or alkali in a gas phase.

In the method of producing a porous carbon material according to the present technology, by performing the acid or alkali treatment under pressurized conditions, it is possible to effectively remove the silicon component contained in the porous carbon material precursor, particularly crystalline silica that is believed to be a causative agent of silicosis. Further, the acid or alkali treatment may be performed under heating conditions in addition to pressurization. Further, these may be combined with stirring. Here, the heating in the heating conditions is not limited to the application of heat independently of pressurization and also includes heating that occurs in conjunction with pressurization.

The lower limit of the pressurized conditions of the acid or alkali treatment is not particularly limited as long as the conditions are of pressurized. However, for example, by setting the lower limit to more than 0.1 MPa, favorably 0.2 MPa or more, still more favorably 1 MPa or more, it is possible to effectively remove the silicon component contained in the porous carbon material precursor, particularly crystalline silica.

The upper limit of the pressurized conditions of the acid or alkali treatment is not particularly limited. However, from the viewpoint of suppressing corrosion of materials that can be used in the treatment equipment, such as stainless steel (SUS) and glass lining (GL), the upper limit can be appropriately adjusted to, for example, not more than 25.0 MPa, favorably 10 MPa or less, still more favorably 3 MPa or less.

The lower limit of the temperature of the acid or alkali treatment is not particularly limited, but can be appropriately adjusted to, for example, 60°C or more, favorably 80°C or more, still more favorably 100°C or more.

The upper limit of the temperature of the acid or alkali treatment is not particularly limited. However, by appropriately adjusting the upper limit to, for example, 450°C or less, favorably 200°C or less, still more favorably 150°C or less, it is possible to suppress the generation of coesite.

In the method of producing a porous carbon material according to the present technology, in the case of treating the porous carbon material precursor with an acid, one or more acids selected from fluorine compounds exhibiting acidity such as hydrogen fluoride, hydrofluoric acid, ammonium fluoride, calcium fluoride, sodium fluoride can be suitably used as the acid. Note that one type of acid may be used alone, or two or more types of acids may be used in any combination and ratio.

In the case where a fluorine compound is used, the amount of fluorine element only needs to be four times the amount of silicon element in the silicon component contained in the porous carbon material precursor, and the concentration of the fluorine compound aqueous solution is favorably 10 weight% or more. In the case where the silicon component contained in the porous carbon material precursor (e.g., silicon dioxide) is removed using hydrofluoric acid, the silicon dioxide reacts with the hydrofluoric acid as shown in the following chemical formula (1) or chemical formula (2), and is removed as hexafluorosilicic acid ($H_2SiF_6$) or silicon tetrafluoride ($SiF_4$), thereby obtaining a porous carbon material.

$$SiO_2 + 6HF \rightarrow H_2SiF_6 + 2H_2O \qquad (1)$$

$$SiO_2 + 4HF \rightarrow SiF_4 + 2H_2O \qquad (2)$$

Further, in the method of producing a porous carbon material according to the present technology, in the case of treating the porous carbon material precursor with an alkali, it is favorable to use one or more alkalis selected from alkali metal derivatives such as potassium hydroxide (KOH) and sodium hydroxide (NaOH) and alkaline earth metal derivatives such as calcium hydroxide ($Ca(OH)_2$) and magnesium hydroxide ($Mg(OH)_2$), more favorable to use one or more alkalis selected from alkali metal derivatives such as potassium hydroxide (KOH) and sodium hydroxide (NaOH), and particularly favorable to use an alkali containing at least sodium hydroxide (NaOH), as the alkali. Note that one type of alkali may be used alone, or two or more types of alkalis may be used in any combination and ratio.

In the method of producing a porous carbon material according to the present technology, in the case of using an aqueous solution of an alkali, the pH of the aqueous solution is favorably 11 or more. For example, in the case where the silicon component contained in the porous carbon material precursor (e.g., silicon dioxide) is removed using an aqueous sodium hydroxide solution, the silicon dioxide reacts as shown in the following chemical formula (3) by heating the aqueous sodium hydroxide solution, and is removed as sodium silicate ($Na_2SiO_3$), thereby obtaining a porous carbon material. Further, in the case where sodium hydroxide is treated by reacting in a gas phase, the solid sodium hydroxide is heated to react as shown in the chemical formula (3) and is removed as sodium silicate ($NaSiO_3$), thereby obtaining a porous carbon material.

$$SiO_2 + 2NaOH \rightarrow Na_2SiO_3 + H_2O \qquad (3)$$

In the method of producing a porous carbon material according to the present technology, by increasing the concentration of the acid or alkali used in the acid or alkali treatment, it is possible to efficiently promote the reaction between the silicon component and the acid or alkali as described above.

For example, in the case where treatment is performed using an aqueous solution including one or more alkalis selected from alkali metal derivatives, by setting the concentration of the alkali to favorably 1.0 mol/L or more, still more favorably 3.0 mol/L or more, particularly favorably 5 mol/L or more, it is possible to efficiently promote the reaction shown in the chemical formula (3), for example.

In the method of producing a porous carbon material according to the present technology, in the case of using the method of immersing a porous carbon material precursor in an aqueous solution of an acid or alkali, by setting the immersion time to, for example, 1 hour or more, favorably 3 hours or more, still more favorably 5 hours or more, it is possible to improve the effect of removing the silicon component contained in the porous carbon material precursor, particularly crystalline silica, under pressurized conditions.

The upper limit of the immersion time in this case is not particularly limited, but can be appropriately adjusted to, for example, 24 hours or less, favorably 10 hours or less, still more favorably 6 hours or less.

In the method of producing a porous carbon material according to the present technology, in the case of using the method of immersing a porous carbon material precursor in an aqueous solution of an acid or alkali, by stirring the aqueous solution of the acid or alkali, it is possible to improve the effect of removing the silicon component contained in the porous carbon material precursor, particularly crystalline silica, under pressurized conditions.

The stirring is not particularly limited as long as the conditions are for making the concentration and temperature of the aqueous solution of the acid or alkali uniform, and the size and speed of the device for stirring can be arbitrarily adjusted.

In the method of producing a porous carbon material according to the present technology, by performing pre-processing with an acid or alkali before performing acid or alkali treatment under pressurized conditions, it is possible to further improve the effect of removing the silicon component contained in the porous carbon material precursor, particularly crystalline silica, under pressurized conditions.

In the case where the method of immersing a porous carbon material precursor in an aqueous solution of an acid or alkali is used as the acid or alkali treatment, it is favorable to immerse the porous carbon material precursor in the aqueous solution of the acid or alkali as pre-processing under normal pressure before pressurization. Further, in the case where the porous carbon material precursor and the acid or alkali are caused to react with each other in a gas phase, it is favorable to expose the porous carbon material precursor to an acid or alkali atmosphere as pre-processing under normal pressure before pressurization. The acid or alkali used in the pre-processing may be the same as that used in the acid or alkali treatment performed under pressurized conditions. Here, the phrase "under normal pressure" only needs to be a state of being substantially unpressurized in addition to the air pressure and does not mean the state of strictly 0.1 MPa.

The lower limit of the temperature when performing the pre-processing with the acid or alkali is not particularly limited, but can be appropriately adjusted to, for example, 40°C or more, favorably 80°C or more, still more favorably 100°C. Further, the upper limit of the temperature when performing the pre-processing is also not particularly limited, but can be appropriately adjusted to, for example,100°C or less, favorably 90°C or less, still more favorably 80°C or less.

In the pre-processing in the case where the method of immersing a porous carbon material precursor in an aqueous solution of an acid or alkali is used, by setting the immersion time to, for example, 1 hour or more, favorably 5 hours or more, still more favorably 10 hours or more, it is possible to improve the effect of performing the pre-processing.

The upper limit of the immersion time in this case is not particularly limited, but can be appropriately adjusted to, for example, 24 hours or less, favorably 16 hours or less, still more favorably 10 hours or less.

In the method of producing a porous carbon material according to the present technology, the porous carbon material obtained by the acid or alkali treatment of the porous carbon material precursor is then favorably cleaned until it becomes neutral and then dried. Here, the term "neutral" only needs to be a state of being neither substantially acidic nor alkaline and does not refer to the state of strictly pH 7.0.

The cleaning solution used to clean the porous carbon material is not particularly limited as long as it is capable of cleaning the acid or alkali used in the acid or alkali treatment. For example, water or ethyl alcohol can be suitably used. Further, by using, as the cleaning solution, one free of impurities, e.g., RO water filtered through a reverse osmosis (RO) membrane or ion exchanged water treated with an ion-exchange resin, it is possible to more effectively clean the acid or alkali.

The cleaned porous carbon material is then favorably dried. The drying conditions are not particularly limited, and the cleaned porous carbon material can be dried under any conditions.

<Activation treatment>

In the method of producing a porous carbon material according to the present technology, by further performing activation treatment after the treatment with the acid or alkali, it is possible to increase the number of pores with a pore size of less than 2 nm, which are formed in the porous carbon material.

Examples of the method for activation treatment include a gas activation method and a chemical activation method. Here, the gas activation method is a method of using oxygen, water vapor, carbon dioxide, air, or the like as an activator and heating the porous carbon material at 700°C to 1000°C for several tens of minutes to several hours in such a gas atmosphere, thereby developing a microstructure by the volatile components or carbon molecules in the porous carbon material. Note that the heating temperature only needs to be appropriately selected on the basis of the type of material of plant origin, the type and concentration of gas, and the like, but is favorably 800°C or more and 950°C or less.

The chemical activation method is a method of using zinc chloride, iron chloride, calcium phosphate, calcium hydroxide, magnesium carbonate, potassium carbonate, sulfuric acid, or the like for activation instead of oxygen or water vapor used in the gas activation method, cleaning with hydrochloric acid, adjusting the pH with an alkaline aqueous solution, and drying.

<Cleaning after activation treatment>

In the method of producing a porous carbon material according to the present technology, cleaning may be further performed after performing the activation treatment. By performing cleaning, it is expected that the adsorption performance of substances on the surface of the pores formed in the porous carbon material can be improved. In particular, it is favorable to perform the cleaning for applications requiring the seepage pH of food additive standards, the ash content rate of medical charcoal standards, and quinine sulfate adsorption capacity.

As the cleaning after the activation treatment, acid cleaning or alkali cleaning can be appropriately selected. Further, the pH may be adjusted after the cleaning. In order to reduce the content of metal elements such as aluminum, calcium, copper, iron, potassium, magnesium, sodium, phosphorus, and silicon, it is favorable to perform acid cleaning treatment. In the case where it is desired to further reduce the content of the metal elements, it is favorable to perform both alkali cleaning and acid cleaning.

<Pulverization>

In the method of producing a porous carbon material according to the present technology, the material of plant origin may be pulverized as necessary to a desired grain size according to the application, and may further be classified. Further, the material of plant origin may be cleaned in advance. In the case where the pulverization is performed in the method of producing a porous carbon material according to the present technology, the order in the step is not limited and the pulverization can be performed at any timing in the method of producing a porous carbon material.

<Solidification>

In the method of producing a porous carbon material according to the present technology, the material of plant origin may be solidified by molding as necessary. By improving the bulk density of the material of plant origin by solidification, it is possible to facilitate the transportation and handling of the raw material and the porous carbon material. Further, even in the case where the amount of porous carbon material that can be treated at one time during production in each step of the method of producing a porous carbon material is limited, the solidification allows the amount of porous carbon material that can be treated at one time to increase and the treatment efficiency to be improved.

By the solidification, the bulk density of the material of plant origin can be, for example 0.2 $g/cm^3$ or more, favorably 0.21 $g/cm^3$ or more, still more favorably 0.23 $g/cm^3$ more. Further, the upper limit of the bulk density is not particularly limited, but can be appropriately selected and adjusted to, for example, 1.4 $g/cm^3$ or less, favorably 1.0 $g/cm^3$ or less, still more favorably 0.5 $g/cm^3$ or less.

Examples of the method of solidifying the material of plant origin include a method of molding it into pellets using a ring die, flat die, or screw molding machine. Other examples include a method of solidifying into a firewood or roll shape. After solidifying the material of plant origin using these methods, it may be pulverized to an appropriate size. In the case where the solidification is performed in the method of producing a porous carbon material according to the present technology, the order in the step is not limited and the solidification can be performed at any timing in the method of producing a porous carbon material. Furthermore, the number of times the solidification treatment is performed is not limited throughout the step. The solidification treatment can be performed at any timing any number of times in accordance with the properties of the porous carbon material to be produced and the like.

<Order of solidification treatment>

In the method of producing a porous carbon material according to the present technology, the solidification treatment can be performed at any timing as described above. For example, the carbonization treatment may be performed after the solidification treatment, such as "raw material -> pulverization -> solidification -> carbonization -> acid or alkali treatment -> activation". Further, for example, the solidification treatment may be performed after the carbonization treatment, such as "raw material -> carbonization -> acid or alkali treatment -> pulverization -> solidification -> activation".

In the method of producing a porous carbon material according to the present technology, in the case of the order of the solidification after the carbonization, the material of plant origin may be carbonized at 400°C to 1400°C and then subjected to acid or alkali treatment. In this way, the agent penetrates into the interior of the low-density carbonized material before solidification (porous carbon material precursor), during the acid or alkali treatment. This improves the silica removal rate from the porous carbon material obtained by the acid or alkali treatment, reduces the ash content rate, and increases the specific surface area. Further, the conditions for the subsequent solidification can be easily adjusted, it is possible to increase the bulk density of the carbon component depending on the intended use or improve the energy efficiency when being used as bio-coke

In this case, as acid or alkali treatment may be performed under known conditions or the conditions according to the present technology. Note that even in this case, it is favorable to adopt the above-mentioned conditions of the acid or alkali treatment according to the present technology from the viewpoint of improving the silica removal rate. The porous carbon material generated by the solidification after the carbonization is expected to have an increased weight density, a high hardness and packing density, and a low ash content rate because the carbonized material having a low ash content rate after the acid or alkali treatment is pulverized and solidified.

In the case where the solidification treatment is performed after the carbonization in the method of producing a porous carbon material according to the present technology, the carbonization may be performed on the material of plant origin that has not been subjected to solidification treatment. The material of plant origin that has not been subjected to solidification treatment is expected to become a low-density carbonized material (porous carbon material precursor). For this reason, for example, after that, in the case where the acid or alkali treatment is performed on the porous carbon material precursor under known conditions or the above-mentioned conditions according to the present technology, the agent can penetrate into the interior of the porous carbon material precursor.

In the case where the solidification treatment is performed after the carbonization in the method of producing a porous carbon material according to the present technology, by using a material of plant origin having a bulk density of 0.2 $g/cm^3$ or less, 0.25 $g/cm^3$ or less, or 0.30 $g/cm^3$ or less when carbonizing, it is expected to become a low-density carbonized material (porous carbon material precursor) by the carbonization treatment as in the case of using the above-mentioned material of plant origin that has not been subjected to solidification treatment.

In the case where the solidification treatment is performed after the carbonization in the method of producing a porous carbon material according to the present technology, since the weight density can be improved as described above, the solidification treatment can be performed until the bulk density of the porous carbon material reaches 0.2 $g/cm^3$ or more, 0.25 $g/cm^3$ or more, or 0.30 $g/cm^3$ or more, for example.

In the case where the solidification is performed after the carbonization in the method of producing a porous carbon material according to the present technology, the pulverization or activation treatment may be performed in accordance with the application of the porous carbon material to be generated as described above. In the case where pulverization or activation treatment is performed, the order in the step is not limited and the pulverization or activation treatment can be performed at any timing in the method of producing a porous carbon material. For example, the pulverization may be performed before the solidification and the activation treatment may be performed after the acid or alkali treatment.

<Sieving>

The porous carbon material according to the present technology, which has been subjected to activation, pulverized in accordance with the application, and molded at arbitrary timing, can be sieved to make the size thereof uniform. Further, the molded porous carbon material may be pulverized again in accordance with the application and then sieved.

<Porous carbon material>

By the method of producing a porous carbon material according to the present technology, it is possible to suitably produce a porous carbon material of plant origin having a value of the specific surface area measured by the nitrogen BET method (hereinafter, referred to simply as a "value of the specific surface area") of 10 $m^2/g$ or more and a volume of a pore measured by a BJH method and an MP method of 0.1 $cm^3/g$ or more.

The value of the specific surface area of the porous carbon material according to the present technology is favorably 10 $m^2/g$ or more, more favorably 50 $m^2/g$ or more, still more favorably 100 $m^2/g$ or more. The larger the specific surface area of the porous carbon material, the more excellent the functionality can be expected.

The nitrogen BET method is a method of measuring an adsorption isotherm by adsorbing and desorbing nitrogen to/from a porous carbon material as adsorption molecules, and analyzing the measured data on the basis of the BET formula represented by the following formula (1). The specific surface area, the pore volume, and the like can be calculated on the basis of this method.

Specifically, in the case where the value of the specific surface area is calculated using the nitrogen BET method, first, an adsorption isotherm is obtained by adsorbing and desorbing nitrogen to/from the porous carbon material as adsorption molecules. Then, $[p / \{V_a (p_0 - p)\}]$ is calculated from the obtained adsorption isotherm on the basis of the formula (1) or the formula (1') obtained by modifying the formula (1) and plotted against the equilibrium relative pressure $(p / p_0)$. Then, this plot is regarded as a straight line, and a slope $s (= [(C - 1) / (C \cdot V_m)])$ and an intercept $i (= [1 / (C \cdot V_m)])$ are calculated on the basis of the least squares method. Then, $V_m$ and $C$ are calculated from the obtained slope $s$ and intercept $i$ on the basis of the following formula (2-1) and formula (2-2). Further, a specific surface area $a_{sBET}$ is calculated from $V_m$ on the basis of the formula (3) (see BELSORP-mini and BELSORP analysis software manuals, pages 62 to 66, manufactured by MicrotracBEL Corp.).

Note that this nitrogen BET method is a measurement method conforming to JIS R 1626-1996 "Measuring methods for the specific surface area of fine ceramic powders by gas adsorption using the BET method".

$$V_a = (V_m \cdot C \cdot p) / [(p_0 - p)\{1 + (C-1)(p / p_0)\}] \tag{1}$$

$$[p / \{V_a(p_0 - p)\}] = [(C-1) / (C \cdot V_m)](p / p_0) + [1 / (C \cdot V_m)] \tag{1'}$$

$$V_m = 1 / (s + i) \tag{2-1}$$

$$C = (s / i) + 1 \tag{2-2}$$

$$a_{SBET} = (V_m \cdot L \cdot \sigma) / 22414 \tag{3}$$

Wherein,

$V_a$:   adsorption amount
$V_m$:   adsorption amount of monomolecular layer
$p$ :   pressure at equilibrium of nitrogen
$p_0$:   saturated vapor pressure of nitrogen
$L$ :   Avogadro's number
$\sigma$ :   adsorption cross-sectional area of nitrogen.

In the case of calculating a pore volume Vp using the nitrogen BET method, for example, the adsorption data of the obtained adsorption isotherm is linearly interpolated to obtain an adsorption amount V at the relative pressure set in the pore volume calculation relative pressure. The pore volume $V_p$ can be calculated from this adsorption amount V on the basis of the following formula (4) (see BELSORP-mini and BELSORP analysis software manuals, pages 62 to 65, manufactured by MicrotracBEL Corp.). Note that hereinafter, the pore volume based on the nitrogen BET method will be referred to simply as a "pore volume" in some cases.

$$V_p = (V / 22414) \times (M_g / \rho_g) \tag{4}$$

Wherein,

$V$:   adsorption amount at relative pressure
$M_g$:   molecular weight of nitrogen
$\rho_g$:   density of nitrogen.

The volume of the pore measured by the BJH method and the MP method of the porous carbon material according to the present technology is favorably 0.1 cm$^3$/g or more, more favorably 0.15 cm$^3$/g or more, still more favorably 0.2 cm$^3$/g or more. The larger the volume of the pore measured by the BJH method and the MP method of the porous carbon material, the more excellent the functionality can be expected.
The pore size of the pore of the porous carbon material can be calculated, for example, on the basis of the BJH method as the distribution of the pore from the rate of change in pore volume relative to the pore size. The BJH method is a method that is widely used as a pore distribution analysis method.
In the case of analyzing the pore distribution on the basis of the BJH method, first, a desorption isotherm is obtained by adsorbing and desorbing nitrogen to/from a porous carbon material as adsorption molecules. Then, the thickness of the adsorption layer when adsorption molecules (e.g. nitrogen) are desorbed in a stepwise manner from the state where the pore is filled with the adsorption molecules and the inner diameter (twice the core radius) of the pore generated at that time are obtained on the basis of the obtained desorption isotherm, a pore radius $r_p$ is calculated on the basis of the following formula (5), and the pore volume is calculated on the basis of the following formula (6). Then, a pore distribution curve can be obtained by plotting the rate of change in pore volume ($dV_p/dr_p$) against the pore diameter ($2r_p$) from the pore radius and the pore volume (see BELSORP-mini and BELSORP analysis software manuals, pages 85 to 88, manufactured by MicrotracBEL Corp.).

$$r_p = t + r_k \qquad (5)$$

$$V_{pn} = R_n \cdot dV_n - R_n \cdot dt_n \cdot c \cdot \Sigma A_{pj} \qquad (6)$$

wherein,

$$R_n = r_{pn}{}^2 / (rkn - 1 + dt_n)^2 \qquad (7)$$

Wherein,

$r_p$: pore radius
$r_k$: core radius (inner diameter / 2) when an adsorption layer having a thickness t is adsorbed on the inner wall of a pore having the pore radius rp at that pressure
$V_{pn}$: pore volume when the n-th adsorption/desorption of nitrogen occurs
$dV_n$: amount of change at that time
$dt_n$: amount of change in a thickness tn of an adsorption layer when the n-th adsorption/desorption of nitrogen occurs
$r_{kn}$: core radius at that time
c: fixed value
$r_{pn}$: pore radius when the n-th adsorption/desorption of nitrogen occurs. Further, $\Sigma A_{pj}$ represents the integrated value of the area of the wall surface of the pore from j = 1 to j = n-1.

The pore size of the pore can be calculated, for example, on the basis of the MP method as the distribution of the pore from the rate of change in pore volume relative to the pore size. In the case of analyzing the pore distribution using the MP method, first, an adsorption isotherm is obtained by adsorbing nitrogen to the porous carbon material. Then, this adsorption isotherm is converted into the pore volume relative to the thickness t of the adsorption layer (t plot). Then, a pore distribution curve can be obtained on the basis of the curvature of this plot (amount of change in pore volume relative to the amount of change in the thickness t of the adsorption layer) (see BELSORP-mini and BELSORP analysis software manuals, pages 72 to 73 and 82 manufactured by MicrotracBEL Corp.).

In the method of producing a porous carbon material according to the present technology, by performing the acid or alkali treatment under pressurized conditions, it is possible to effectively remove the silicon component contained in the porous carbon material precursor, particularly crystalline silica that is believed to be a causative agent of silicosis. Therefore, in the absorption spectrum obtained by Kubelka-Munk conversion of the relative diffuse reflectance indicating a ratio of diffuse reflected light to total reflected light of light incident on a material, the peak due to crystalline silica that can appear near the wavenumber of 620 cm$^{-1}$ is reduced or not measured.

Specifically, in the case where the average value (average KM value) of Kubelka-Munk intensity values (KM values) at wavenumbers of 670 to 580 cm$^{-1}$ is defined as a baseline, the ratio of a KM value (KM value ratio) of a peak that can appear near 620 cm$^{-1}$ is 0.3 or less.

The above "average KM value" refers to the arithmetic average of two or more KM values measured in the target range. The number of KM values used for arithmetic average is not particularly limited as long as it is two or more, but the number of KM values is favorably larger.

Further, the "peak" refers to a waveform including the area around the maximal value of the wavenumber graph of the above absorption spectrum. Here, the "maximal value" refers to a value at a point where the sign of the differential coefficient changes from positive to negative in the waveform of the wavenumber graph of the absorption spectrum.

The phrase "near the wavenumber of 620 cm$^{-1}$" specifically refers to a range of 10 cm$^{-1}$ around 620 cm$^{-1}$, more specifically a range of 610 cm$^{-1}$ to 630 cm$^{-1}$.

In the porous carbon material according to the present technology, the ratio of the KM value of the peak near the wavenumber of 620 cm$^{-1}$ relative to the average value (average KM value) of Kubelka-Munk intensity values (KM values) at wavenumbers of 670 to 580 cm$^{-1}$ of the absorption spectrum is favorably 0.3 or less, more favorably 0.2 or less, still more favorably 0.1 or less.

Further, since the porous carbon material according to the present technology is capable of efficiently removing crystalline silica, the peak due to silica including amorphous silica that can appear near the wavenumber of 810 cm$^{-1}$ in the above-mentioned absorption spectrum is reduced or not measured.

Specifically, the ratio of the KM value (KM value ratio) of a peak near 810 cm$^{-1}$ relative to the average value (average KM value) of Kubelka-Munk intensity values (KM values) at wavenumbers 870 to 730 cm$^{-1}$ is 0.3 or less.

The phrase "near the wavenumber of 810 cm$^{-1}$" specifically refers to a range of 10 cm$^{-1}$ around 810 cm$^{-1}$, more specifically a range of 800 cm$^{-1}$ to 820 cm$^{-1}$.

In the porous carbon material according to the present technology, the ratio of the KM value of a peak near the wavenumber of 810 $cm^{-1}$ relative to the average value (average KM value) Kubelka-Munk intensity values (KM values) at wavenumbers 870 to 730 $cm^{-1}$ of the absorption spectrum is favorably 0.3 or less, more favorably 0.2 or less, still more favorably 0.1 or less.

<Imparting functionality>

A functional material may be impregnated into the porous carbon material according to the present technology. Specifically, after performing the acid or alkali treatment (in the case of performing activation treatment after that, after performing the activation treatment), a functional material may be impregnated into the solidified porous carbon material according to the present disclosure. By impregnating the functional material, it is expected that the effect of removing or decomposing the target substance can be imparted. Note that the phrase "impregnated into" refers to the state where the surfaces of different materials are bonded by the bonding force of the interface, and the state where a functional material is impregnated into the porous carbon material according to the present technology refers to the state where the functional material is bonded to the surface of the porous carbon material according to the present technology by the bonding force of the interface. Further, the phrase "bonding force of the interface" depends on the chemical interaction and mechanical bond between the surface molecules of both.

Examples of the functional material to be impregnated into the porous carbon material according to the present technology include an agent for more effectively adsorbing the above substances present in the air (specifically, for example, ethylene urea, phosphoric acid, copper nitrate). Further, other examples include titanium oxide ($TiO_2$) and zinc oxide (ZnO), which exhibit photocatalytic properties.

By using ethylene urea, it is expected that formaldehyde and acetaldehyde can be effectively removed. By using phosphoric acid, it is expected that ammonia can be effectively removed. By using copper nitrate, ammonia, hydrogen sulfide, and the like can be effectively deodorized. By using a material that exhibits photocatalytic properties, it is expected that it can be applied as decomposers of harmful substances such as viruses present in the air, allergy-causing substances, and carcinogenic substances (e.g., benzopyrene) contained cigarette smoke and as removers of the harmful substances. For the decomposition and removal of harmful substances, the porous carbon material may be irradiated with energy rays or electromagnetic waves (e.g., ultraviolet rays, sunlight, or visible light).

Although it depends on the type, configuration, structure, and form of the functional material, examples of the form of impregnation of the functional material into the porous carbon material include states of being impregnated into the surface (including the inside of the pore) of the porous carbon material as fine particles, in a thin film shape, and a sea/island shape (when the surface of the porous carbon material is regarded as the "sea", the functional material corresponds to the "island").

Examples of the method of impregnating the functional material into the porous carbon material according to the present technology include a method of precipitating the functional material on the surface of the porous carbon material by immersing the porous carbon material in a solution containing the functional material, a method of precipitating the functional material on the surface of the porous carbon material by electroless plating (chemical plating), or chemical reduction reaction, a method of precipitating the functional material on the surface of the porous carbon material by immersing the porous carbon material in a solution including a precursor of the functional material and performing heat treatment, a method of precipitating the functional material on the surface of the porous carbon material by immersing the porous carbon material in a solution including a precursor of the functional material and performing ultrasonic treatment, a method of precipitating the functional material on the surface of the porous carbon material by immersing the porous carbon material in a solution including a precursor of the functional material and performing a sol-gel reaction, and a method using a condensation reaction or a hydrolysis reaction with a silane coupling agent.

<Applications of porous carbon material>

Since the porous carbon material according to the present technology has a value of a specific surface area measured by a nitrogen BET method of 10 $m^2/g$ or more and a volume of a pore measured by a BJH method and an MP method of 0.1 $cm^3/g$ or more, excellent adsorption properties can be achieved. Further, since it is capable of effectively removing crystalline silica that is believed to be a causative agent of silicosis, high safety is expected and it can be suitably used as an adsorbent.

The adsorbent that uses the porous carbon material according to the present technology can be suitably used for an air purifier filter, a water purification cartridge, a preceding-stage filter for various filtration membranes (RO membrane, NF membrane, UF membrane, MF membrane, and the like) or an ion-exchange resin, a contaminant removal sheet member, a gas component analysts collection material, a column packing material, a soil environment restoration agent, a drug carrier, a drug sustained release material, a microorganism carrier, a fiber product, cosmetics, a body care product, other daily necessities, an electrochemical device such as a battery such as a lithium-ion secondary batter, a lithium-sulfur battery, and an all-solid battery, and an electric double layer capacitor.

In the case where the adsorbent that uses the porous carbon material according to the present technology is used in a fiber product, the porous carbon material according to the present technology can be kneaded into a raw material of a fiber such as cotton to suitably produce threads. Further, the threads can also be used to produce fabrics or cloth.

The porous carbon material according to the present technology can be suitably used as biochar or bio-coke because of its properties that it is of plant origin and porous and has a low ash content rate. The emission amount of greenhouse gases is significantly lower because it is of plant origin, as compared with coke, which has been used as a fossil fuel. Further, it can be used as a fuel with a high amount of heat and combustion efficiency per weight because the ash content rate is low and the carbon content is high, as compared with the existing bio-coke.

(Examples)

The present technology will be further specifically described below using Examples. Note that the present technology is not limited to the content of the Examples described below.

First, Example in which a material of plant origin is carbonized and then acid or alkali treatment is performed under pressurized conditions is shown.

<Preparation of carbonized material>

A husk (husk of Hinohikari from Kagoshima Prefecture) of rice (rice plants) was used as a material of plant origin in Examples.

10 grams of the above husk was placed in an alumina crucible, heated to the carbonization temperature shown in Table 1 at the heating rate of 5°C /min in a nitrogen gas flow (10 liters/min), carbonized at the carbonization temperature for 6 hours, converted into a carbonaceous material (porous carbon material precursor), and then cooled to room temperature, thereby obtaining carbonized materials 1 to 7 shown in Table 1 as porous carbon material precursors. Note that during carbonization and cooling, nitrogen gas was continuously flowed. The peak top in Table 1 refers to the maximal value in the peak of the absorption spectrum.

(Table 1)

| | Carbonization temperature [°C] | Carbonization step | | | | |
| | | Range : 670-580 cm-1 | | Range : 870-730 cm⁻¹ | | Suppression of generation of crystalline silica |
| | | Peak top [cm⁻¹] | KM value ratio [a.u.] | Peak top [cm⁻¹] | KM value ratio [a.u.] | |
| Carbonized material 1 | 400 | 620 | 0.0 | 811 | 1.7 | A |
| Carbonized material 2 | 500 | 620 | 0.0 | 811 | 1.7 | A |
| Carbonized material 3 | 600 | 620 | 0.0 | 811 | 1.5 | A |
| Carbonized material 4 | 700 | 620 | 0.0 | 811 | 1.1 | A |
| Carbonized material 5 | 800 | 620 | 0.0 | 811 | 0.5 | A |
| Carbonized material 6 | 900 | 620 | 0.0 | 811 | 0.4 | A |
| Carbonized material 7 | 1000 | 620 | 3.6 | 794 | 2.9 | B |

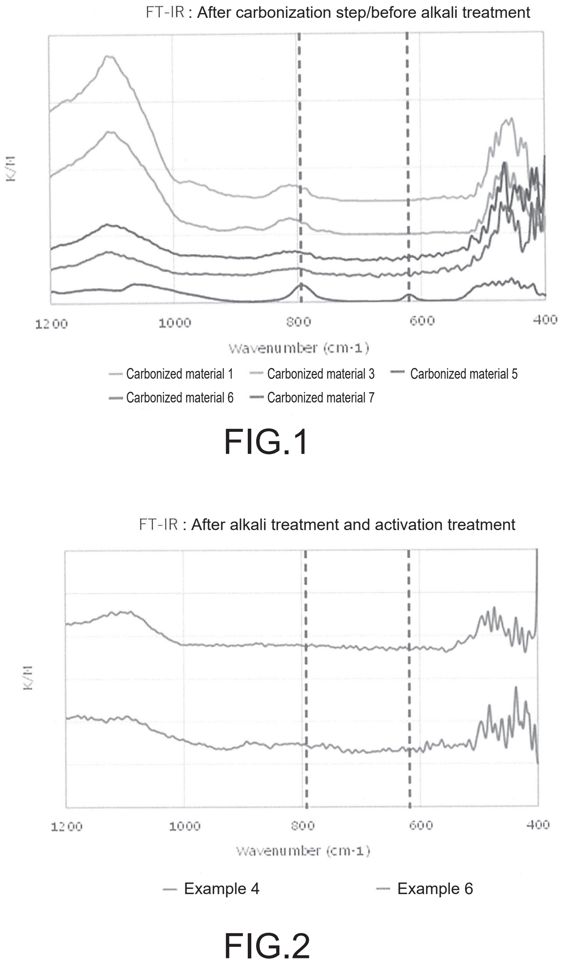

Each of the carbonized materials 1, 3, and 5 to 7 was pulverized and mixed in an agate mortar such that the amount of potassium bromide (KBr) is approximately 5 weight% relative to 100 weight% of each sample, thereby preparing samples. After that, the prepared samples were evaluated by FT-IR diffuse reflectance spectroscopy using a diffuse reflectance measuring apparatus (DR PRO410-M/JASCO Corporation). The results are shown in Fig. 1.

Although the peak due to silica including amorphous silica that can appear at the wavenumber of 800 cm⁻¹ can be observed in all of the porous carbon material precursors of the carbonized materials 1, 3, and 5 to 7, it was confirmed that the higher the carbonization temperature condition, the larger the peak tends to be.

Since the peak due to crystalline silica that can appear at the wavenumber of 620 cm⁻¹ cannot be substantially observed in the porous carbon materials of the carbonized material1, 3, and 5 to 6, it was confirmed that the generation of crystalline silica was reduced to a certain extent.

<Evaluation criteria>

A. In measurement using FT-IR diffuse reflectance spectroscopy, generation of crystalline silica is suppressed to the extent that the peak due to crystalline silica cannot be observed
B. In measurement using FT-IR diffuse reflectance spectroscopy, generation of crystalline silica is reduced although the peak due to crystalline silica can be observed
C. In measurement using FT-IR diffuse reflectance spectroscopy, the peak due to crystalline silica is clearly observed

Note that the ash content rate of the material 2 was measured using a TG/DTA measuring apparatus (DTG-60/Shimadzu Corporation) under conditions of an oxygen atmosphere, a heating rate of 10 to 20°C/min, and a final temperature of 1000°C. The ash content rate, which indicates the ratio of ash to 100 weight% of the material 2, was 50 weight%.

After that, the above carbonized materials (porous carbon material precursors) shown in Table 1 were immersed in the aqueous sodium hydroxide solution having the concentration shown in Table 2 under the pressure and temperature conditions shown in Table 2 and held for 10 hours to obtain porous carbon materials according to Examples 1 to 5 and Comparative Examples 1 and 2. Note that by stirring the aqueous sodium hydroxide solution during the immersion of the carbonized material in the aqueous sodium hydroxide solution, the concentration and temperature of the aqueous sodium hydroxide solution were adjusted to a substantially uniform state.

The porous carbon materials obtained above were washed with RO water filtered through a reverse osmosis (RO) membrane until it becomes neutral and then dried at 120°C for 24 hours.

(Table 2)

| | | Step of alkali treatment | | | |
|---|---|---|---|---|---|
| | Carbonized material | NaOH aq concentration [mol/L] | Temperature [°C] | Pressure [MPa] | Ash content ratio [%] |
| Example 1 | Carbonized material 2 | 18 | 105 | 1.0 | 8.2 |
| Example 2 | Carbonized material 5 | 1 | 120 | 0.2 | 4.0 |
| Example 3 | Carbonized material 5 | 5 | 120 | 0.2 | 5.3 |
| Example 4 | Carbonized material 5 | 1 | 200 | 1.5 | 7.0 |
| Example 5 | Carbonized material 7 | 18 | 105 | 1.0 | |
| Comparative Example 1 | Carbonized material 5 | 1 | 40 | 0.1 | 33 |
| Comparative Example 2 | Carbonized material 5 | 5 | 80 | 0.1 | 20 |

Note that in Table 2, the ash content rate of each of the porous carbon materials according to Examples and Comparative Examples, which indicates the ratio of ash to 100 weight% of each material, was measured in accordance with JIS K 1474-2014.

Further, the packing density of the porous carbon material according to Example 1 was measured using a specific surface area/pore distribution measuring apparatus(BELSORP MINI X/MicrotracBEL Corp.) in accordance with JIS K 1474-2014 and was 0.23 g/ml.

Activation treatment based on the gas activation method, specifically activation treatment using oxygen/water vapor at 800 to 950°C for 2 hours, was performed on the porous carbon material that has been subjected to the above alkali treatment. The results are shown in Table 3.

(Table 3)

| | Activation step | | | Ash content ratio [%] | Specific surface area [m²/g] | Adsorption properties |
|---|---|---|---|---|---|---|
| | Material before activation treatment | Atmosphere | Temperature [°C] | | | |
| Example 6 | Example 1 | Oxygen/ water vapor (internal heating) | 800-950 | 13.3 | 934 | A |

The ash content rate of the porous carbon material according to Example 6 in Table 3, which indicates the ratio of ash to 100 weight% of the material, was measured in accordance with JIS K 1474-2014. Further, the specific surface area according to Example 6 was calculated by the above-mentioned nitrogen BET method, and the adsorption properties were evaluated in accordance with the following criteria.

<Evaluation criteria for adsorption properties>

A. adsorption properties suitable for use in filters for water purifiers and air purifiers
B. adsorption properties not suitable for filters for water purifiers and air purifiers

Each material of Example 4 (porous carbon material after alkali treatment) and Example 6 (porous carbon material after activation treatment) was pulverized and mixed in an agate mortar such that the amount of potassium bromide (KBr) is approximately 5 weight% relative to 100 weight% of each sample, thereby preparing samples. After that, the prepared samples were evaluated by FT-IR diffuse reflectance spectroscopy using a diffuse reflectance measuring apparatus (DR PRO410-M/JASCO Corporation). The results are shown in Fig. 2 and Table 4.

(Table 4)

| | Range : 670-580 cm-1 | | Range : 870-730 cm⁻¹ | |
|---|---|---|---|---|
| | Peak top [cm⁻¹] | KM value ratio [a.u.] | Peak top [cm⁻¹] | KM value ratio [a.u.] |
| Example 4 | 620 | 0.0 | 808 | 0.1 |
| Example 6 | 620 | 0.0 | 811 | 0.0 |

In all materials, the peak due to crystalline silica that can appear near the wavenumber of 620 cm⁻¹ was not substantially observed and the peak due to silica including amorphous silica that can appear near the wavenumber of 810 cm⁻¹ was not substantially observed. Therefore, it was confirmed that the method of producing a porous carbon material according to the present technology is capable of efficiently removing crystalline silica and effectively removing amorphous silica.

The cleaning with an alkali treatment liquid having the concentration shown in Fig. 5 (Cleaning 1) was performed at the temperature, for the time, and the number of times shown in Table 5 on the porous carbon material that had been subjected to the above activation treatment.

For Example 7, after the above cleaning 1, cleaning was performed until the pH reached 7.0 using boiled RO water obtained by boiling RO water filtered through a reverse osmosis (RO) membrane.

For Examples 8 to 10, after the above cleaning 1, cleaning was performed at room temperature using RO water for 18 hours, then the pH was adjusted to 7.0 by adding hydrochloric acid (HCl) dropwise, and then cleaning was performed using RO water for 3 hours. After that, it was dried at 120°C for 24 hours.

For Examples 11 and 12, after performing the above cleaning at room temperature using RO water for 18 hours, the cleaning with an acid treatment liquid having the concentration shown in Table 5 (Cleaning 2) was further performed at the temperature, for the time, and the number of times shown in Table 5. After that, cleaning was performed for 18 hours using RO water filtered through a reverse osmosis (RO) membrane at room temperature. After the above cleaning 2, the pH was adjusted to 7.0 by adding sodium hydroxide (NaOH) dropwise, and then cleaning was performed using RO water for 3 hours. After that, it was dried at 120°C for 24 hours.

(Table 5)

| | Material after activation | Cleaning 1 | | | | | Cleaning 2 | | | | | Ash content ratio [%] |
|---|---|---|---|---|---|---|---|---|---|---|---|---|
| | | Treatment liquid | [%] | [°C] | [h] | [Number of times] | Treatment liquid | [%] | [°C] | [h] | [Number of times] | |
| Example 7 | Example 6 | KOH | 30 | 100 | 0.5 | 1 | - | - | - | - | - | 1.2 |
| Example 8 | Example 6 | NaOH | 10 | 70 | 5 | 2 | - | - | - | - | - | 3.3 |
| Example 9 | Example 6 | KOH | 10 | 70 | 5 | 2 | - | - | - | - | - | 4.7 |
| Example 10 | Example 6 | NaOH | 10 | 90 | 5 | 2 | - | - | - | - | - | 3.4 |
| Example 11 | Example 6 | NaOH | 10 | 70 | 5 | 1 | HCl | 10 | rt | 5 | 1 | 2.9 |
| Example 12 | Example 6 | NaOH | 10 | 70 | 5 | 2 | HCl | 10 | rt | 5 | 2 | 2.9 |

The ash content rate of each of the porous carbon materials according to Examples 7 to 12 in Table 5, which indicates the ratio of ash to 100 weight% of the material, was measured in accordance with JIS K 1474-2014.

The calorific value of each of the husk used as a raw material in the above Examples, the carbonized material 5 as an example of the porous carbon material precursor, and Example 1 as the porous carbon material that had been subjected to the alkali treatment according to the present technology was measured using a bomb calorimeter (MC Evolve Technologies Corporation) in accordance with JIS M8814:2003. The results are shown in Table 6. Note that as Reference Examples, the calorific values of general-purpose imported general coal, domestic general coal, and coke listed as literature values are also shown.

(Table 6)

| | Calorific value [MJ/kg] |
|---|---|
| Husk | 15.8 |
| Carbonized material 5 | 16.7 |
| Example 1 | 30.1 |
| (Reference Example) General-purpose imported general coal | 26.1 |
| Domestic general coal | 24.3 |
| Coke | 29.0 |

From the results shown in Table 6, it can be confirmed that the porous carbon material produced by the production method according to the present technology has a calorific value equivalent to that of coke.

Next, Example in the case where a material of plant origin is carbonized and then solidification treatment is performed will be shown.

<Preparation of carbonized material>

A husk (husk of Hinohikari from Kagoshima Prefecture) of rice (rice plants) was used as a material of plant origin to be used in this Example similarly to the above-mentioned Examples, and carbonized materials 21 to 27 shown in Table 7 were obtained as porous carbon material precursors under similar conditions. Note that as the material of plant origin, the material of plant origin that has not been subjected to solidification treatment was used. The bulk density of the material of plant origin was 0.15 g/cm³. The peak top in Table 7 refers to the maximal value in the peak of the absorption spectrum.

(Tabel 7)

| | Carbonization step | | | | | |
|---|---|---|---|---|---|---|
| | Carbonization temperature [°C] | Range : 670-580 cm-1 | | Range : 870-730 cm⁻¹ | | Suppression of generation of crystalline silica |
| | | Peak top[cm⁻¹] | KM value ratio [a.u.] | Peak top[cm⁻¹] | KM value ratio [a.u.] | |
| Carbonized material 21 | 400 | 620 | 0.0 | 811 | 1.7 | A |
| Carbonized material 22 | 500 | 620 | 0.0 | 811 | 1.7 | A |
| Carbonized material 23 | 600 | 620 | 0.0 | 811 | 1.5 | A |
| Carbonized material 24 | 700 | 620 | 0.0 | 811 | 1.1 | A |
| Carbonized material 25 | 800 | 620 | 0.0 | 811 | 0.5 | A |
| Carbonized material 26 | 900 | 620 | 0.0 | 811 | 0.4 | A |
| Carbonized material 27 | 1000 | 620 | 3.6 | 794 | 2.9 | B |

The evaluation criteria for suppression of generation of crystalline silica in Table 7 were the same as those in the above-mentioned Examples.

After that, the above carbonized materials (porous carbon material precursors) shown in Table 7 were immersed in the aqueous sodium hydroxide solution having the concentration shown in Table 8 under the pressure and temperature conditions shown in Table 8 and held for 10 hours to obtain porous carbon materials according to Examples 21 to 28. Note that the conditions for the immersion of the carbonized materials in the aqueous sodium hydroxide solution, cleaning, and drying were the same as those in the above-mentioned Examples.

(Table 8)

| | Step of alkali treatment | | | | |
|---|---|---|---|---|---|
| | Carbonized material | NaOH aq concentration [mol/L] | Temperature [°C] | Pressure [MPa] | Ash content ratio [%] |
| Example 21 | Carbonized material 22 | 18 | 105 | 0.02 | 4.4 |
| Example 22 | Carbonized material 22 | 8 | 105 | 0.02 | 7.2 |
| Example 23 | Carbonized material 22 | 5 | 105 | 0.02 | 4.8 |
| Example 24 | Carbonized material 22 | 1 | 105 | 0.02 | 5.0 |
| Example 25 | Carbonized material 22 | 5 | 120 | 0.10 | 4.5 |
| Example 26 | Carbonized material 22 | 1 | 120 | 0.10 | 5.0 |
| Example 27 | Carbonized material 22 | 5 | 200 | 0.85 | 6.5 |
| Example 28 | Carbonized material 22 | 1 | 200 | 0.90 | 4.3 |

Note that the ash content rate of each of the porous carbon materials described in Table 8, which indicates the ratio of ash to 100 weight% of each material, was measured in accordance with JIS K 1474-2014, in the same manner as that in the above-mentioned Examples.

Activation treatment based on the gas activation method, specifically activation treatment using oxygen/water vapor at 800 to 950°C for 2 hours, was performed on the porous carbon material according to Example 21 that had been subjected to the above alkali treatment. The measurement results of the ash content rate, the specific surface area, and the hardness of the obtained porous carbon material are shown in Table 9.

(Table 9)

| | Activation step | | | Ash content ratio | Specific surface area | Hardness | |
|---|---|---|---|---|---|---|---|
| | Material before activation treatment | Atmosphere | Temperature [°C] | [%] | [m²/g] | % | Adsorption properties |
| Example 29 | Example 21 | Oxygen/ water vapor (internal heating) | 800- 950 | 20 | 897 | 98 | A |

The ash content rate of the porous carbon material according to Example 29 in Table 9, which indicates the ratio of ash to 100 weight% of the material, was measured in accordance with JIS K 1474-2014, in the same manner as that in the above-mentioned Examples. Further, The specific surface area of Example 29 was calculated by the above-mentioned nitrogen BET method, and the adsorption properties were evaluated by the same criteria as those in the above-mentioned Examples. Further, the hardness was measured in accordance with JIS K1474, which is a hardness test for activated carbon.

From the results shown in Table 9, it can be confirmed that the porous carbon material produced by the produced method including carbonizing and then performing solidification treatment according to the present technology has improved hardness due to improved weight density.

Each material of Examples 21 to 28 was pulverized and mixed in an agate mortar such that the amount of potassium bromide (KBr) is approximately 5 weight% relative to 100 weight% of each sample, thereby preparing samples. After that, the prepared samples were evaluated by FT-IR diffuse reflectance spectroscopy using a diffuse reflectance measuring apparatus (DR PR0410-M/JASCO Corporation). The results are shown in Table 10.

(Table 10)

| | Range : 670-580 cm-1 | | Range : 870-730 cm⁻¹ | |
|---|---|---|---|---|
| | Peak top [cm⁻¹] | KM value ratio [a.u.] | Peak top [cm⁻¹] | KM value ratio [a.u.] |
| Example 21 | 620 | 0.0 | 821 | 0.0 |
| Example 22 | 620 | 0.0 | 822 | 0.0 |
| Example 23 | 620 | 0.0 | 822 | 0.0 |
| Example 24 | 620 | 0.0 | 822 | 0.0 |
| Example 25 | 620 | 0.0 | 823 | 0.0 |
| Example 26 | 620 | 0.0 | 824 | 0.0 |
| Example 27 | 620 | 0.0 | 822 | 0.0 |
| Example 28 | 620 | 0.0 | 822 | 0.0 |

In all materials, the peak due to crystalline silica that can appear near the wavenumber of 620 cm⁻¹ was not substantially observed and the peak due to silica including amorphous silica that can appear near the wavenumber of 810 cm⁻¹ was not substantially observed. Therefore, it was confirmed that the method of producing a porous carbon material according to the present technology is capable of efficiently removing crystalline silica and effectively removing amorphous silica.

The calorific value of the material according to Example 21, which is a porous carbon material that had been carbonized and subjected to the solidification treatment according to the present technology, was measured using a bomb calorimeter (MC Evolve Technologies Corporation) in accordance with JIS M8814:2003, in the same manner as that in the above-mentioned Examples. The results are shown in Table 11.

(Table 11)

| | Calorific value [MJ/kg] |
|---|---|
| Example 21 | 2 7 . 9 |

From the results shown in Table 11, it can be confirmed that the porous carbon material produced by the produced method including carbonizing and then performing solidification treatment according to the present technology has an improved calorific value due to improved weight density.

Note that the present technology may also take the following configurations.

(1) A method of producing a porous carbon material, including:
performing solidification treatment on a material of plant origin after carbonizing the material of plant origin at 400°C to 1400°C.
(2) The method of producing a porous carbon material according to (1), further including
performing acid or alkali treatment after the carbonizing.
(3) The method of producing a porous carbon material according to (1) or (2), in which
the carbonizing is performed on the material of plant origin that has not been subjected to solidification treatment.
(4) The method of producing a porous carbon material according to any one of (1) to (3), in which
a bulk density of the material of plant origin is 0.2 g/cm$^3$ to 1.4 g/cm$^3$.
(5) The method of producing a porous carbon material according to any one of (1) to (4), in which
the solidification treatment is performed until the bulk density reaches 0.2 g/cm$^3$ or more.
(6) A method of producing a porous carbon material, including:
carbonizing a material of plant origin at 400°C to 1400°C and then performing acid or alkali treatment under conditions of more than 0.1 MPa and not more than 25.0 MPa.
(7) The method of producing a porous carbon material according to any one of (1) to (6), in which
the acid or alkali treatment is performed at 100°C to 450°C.
(8) The method of producing a porous carbon material according to any one of (1) to (7), in which
the carbonizing is performed at 400°C to 900°C.
(9) The method of producing a porous carbon material according to any one of (1) to (8), in which
the acid or alkali treatment is performed with one or more acids selected from fluorine compounds or one or more alkalis selected from alkali metal derivatives and alkaline earth metal derivatives.
(10) The method of producing a porous carbon material according to any one of (1) to (8), in which
the alkali treatment is performed with one or more alkalis selected from alkali metal derivatives.
(11) The method of producing a porous carbon material according to (10), in which
a concentration of the one or more alkalis selected from alkali metal derivatives is 1.0 mol/L or more.
(12) The method of producing a porous carbon material according to any one of (1) to (11), in which
a bulk density of the material of plant origin is 0.2 g/cm$^3$ to 1.4 g/cm$^3$.
(13) The method of producing a porous carbon material according to any one of (6) to (12), further including
performing solidification treatment on the material of plant origin after performing the acid or alkali treatment.
(14) The method of producing a porous carbon material according to (13), in which
the carbonizing is performed on the material of plant origin that has not been subjected to solidification treatment.
(15) The method of producing a porous carbon material according to any one of (1) to (14), further including
performing activation treatment after the acid or alkali treatment.
(16) A porous carbon material produced by the method of producing a porous carbon material according to any one of (1) to (15).
(17) A porous carbon material of plant origin, in which

a value of a specific surface area measured by a nitrogen BET method is 10 m$^2$/g or more,
a volume of a pore measured by a BJH method and an MP method is 0.1 cm$^3$/g or more, and
a ratio of a KM value (KM value ratio) of a peak near 620 cm$^{-1}$ to an average value (average KM value) of Kubelka-Munk intensity values (KM values) at wavenumbers of 670 to 580 cm$^{-1}$ of an absorption spectrum obtained by Kubelka-Munk conversion of a relative diffuse reflectance indicating a ratio of diffuse reflected light to total reflected light of light incident on a material is 0.3 or less.

(18) A porous carbon material of plant origin, in which

a value of a specific surface area measured by a nitrogen BET method is 10 m$^2$/g or more,

a volume of a pore measured by a BJH method and an MP method is 0.1 cm$^3$/g or more, and
a ratio of a KM value (KM value ratio) of a peak near 810 cm$^{-1}$ to an average value (average KM value) of Kubelka-Munk intensity values (KM values) at wavenumbers 870 to 730 cm$^{-1}$ of an absorption spectrum obtained by Kubelka-Munk conversion of a relative diffuse reflectance indicating a ratio of diffuse reflected light to total reflected light of light incident on a material is 0.3 or less.

(19) An adsorbent that uses the porous carbon material according to (17) or (18).
(20) A fiber, including:
the porous carbon material according to (17) or (18).

**Claims**

1. A method of producing a porous carbon material, comprising:
carbonizing a material of plant origin at 400°C to 1400°C and then performing acid or alkali treatment under conditions of more than 0.1 MPa and not more than 25.0 MPa.

2. The method of producing a porous carbon material according to claim 1, wherein
the acid or alkali treatment is performed at 100°C to 450°C.

3. The method of producing a porous carbon material according to claim 1, wherein
the carbonizing is performed at 400°C to 900°C.

4. The method of producing a porous carbon material according to claim 1, wherein
the acid or alkali treatment is performed with one or more acids selected from fluorine compounds or one or more alkalis selected from alkali metal derivatives and alkaline earth metal derivatives.

5. The method of producing a porous carbon material according to claim 1, wherein
the alkali treatment is performed with one or more alkalis selected from alkali metal derivatives.

6. The method of producing a porous carbon material according to claim 5, wherein
a concentration of the one or more alkalis selected from alkali metal derivatives is 1.0 mol/L or more.

7. The method of producing a porous carbon material according to claim 1, wherein
a bulk density of the material of plant origin is 0.2 g/cm$^3$ to 1.4 g/cm$^3$.

8. The method of producing a porous carbon material according to claim 1, further comprising
performing solidification treatment on the material of plant origin after performing the acid or alkali treatment.

9. The method of producing a porous carbon material according to claim 8, wherein
the carbonizing is performed on the material of plant origin that has not been subjected to solidification treatment.

10. The method of producing a porous carbon material according to claim 1, further comprising
performing activation treatment after the acid or alkali treatment.

11. A porous carbon material produced by the method of producing a porous carbon material according to claim 1.

12. A porous carbon material of plant origin, wherein

a value of a specific surface area measured by a nitrogen BET method is 10 m$^2$/g or more,
a volume of a pore measured by a BJH method and an MP method is 0.1 cm$^3$/g or more, and
a ratio of a KM value (KM value ratio) of a peak near 620 cm$^{-1}$ to an average value (average KM value) of Kubelka-Munk intensity values (KM values) at wavenumbers of 670 to 580 cm$^{-1}$ of an absorption spectrum obtained by Kubelka-Munk conversion of a relative diffuse reflectance indicating a ratio of diffuse reflected light to total reflected light of light incident on a material is 0.3 or less.

13. A porous carbon material of plant origin, wherein

a value of a specific surface area measured by a nitrogen BET method is 10 m$^2$/g or more,
a volume of a pore measured by a BJH method and an MP method is 0.1 cm$^3$/g or more, and
a ratio of a KM value (KM value ratio) of a peak near 810 cm$^{-1}$ to an average value (average KM value) of Kubelka-Munk intensity values (KM values) at wavenumbers 870 to 730 cm$^{-1}$ of an absorption spectrum obtained by Kubelka-Munk conversion of a relative diffuse reflectance indicating a ratio of diffuse reflected light to total reflected light of light incident on a material is 0.3 or less.

14. An adsorbent that uses the porous carbon material according to claim 12 or 13.

15. A fiber, comprising:
the porous carbon material according to claim 12 or 13.

FT-IR : After carbonization step/before alkali treatment

- Carbonized material 1    - Carbonized material 3    - Carbonized material 5

- Carbonized material 6    - Carbonized material 7

## FIG.1

FT-IR : After alkali treatment and activation treatment

- Example 4      - Example 6

## FIG.2

## INTERNATIONAL SEARCH REPORT

| | International application No. |
|---|---|
| | **PCT/JP2023/046104** |

### A. CLASSIFICATION OF SUBJECT MATTER

*C01B 32/318*(2017.01)i; *B01J 20/20*(2006.01)i; *B01J 20/28*(2006.01)i; *B01J 20/30*(2006.01)i; *C01B 32/00*(2017.01)i
FI:  C01B32/318; B01J20/20 A; B01J20/28 A; B01J20/30; B01J20/28 Z; C01B32/00

According to International Patent Classification (IPC) or to both national classification and IPC

### B. FIELDS SEARCHED

Minimum documentation searched (classification system followed by classification symbols)

C01B32/318; B01J20/20; B01J20/28; B01J20/30; C01B32/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2005-263521 A (TAIHEIYO CEMENT CORPORATION) 29 September 2005 (2005-09-29) paragraphs [0020]-[0041], example 4 | 1-11 |
| Y | | 1-8, 10-15 |
| Y | WO 2017/146044 A1 (SONY CORPORATION) 31 August 2017 (2017-08-31) paragraphs [0011]-[0079] | 1-8, 10-15 |
| A | | 9 |
| Y | JP 2008-021966 A (CALGON MITSUBISHI CHEMICAL CORP.) 31 January 2008 (2008-01-31) paragraphs [0047], [0073] | 1-8, 10-15 |
| A | | 9 |
| Y | JP 2016-150896 A (KURARAY CO., LTD.) 22 August 2016 (2016-08-22) paragraphs [0040]-[0043] | 1-8, 10-15 |
| A | | 9 |

| ✓ Further documents are listed in the continuation of Box C. | ✓ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **26 February 2024** | **12 March 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT

| International application No. |
| --- |
| **PCT/JP2023/046104** |

### C. DOCUMENTS CONSIDERED TO BE RELEVANT

| Category* | Citation of document, with indication, where appropriate, of the relevant passages | Relevant to claim No. |
| --- | --- | --- |
| A | JP 2017-222547 A (SHINWA CORP.) 21 December 2017 (2017-12-21)<br>entire text | 1-15 |
| A | CN 113277506 A (CHENGDU TIANFU DAQI TECHNOLOGY CO., LTD.) 20 August 2021 (2021-08-20)<br>entire text | 1-15 |

Form PCT/ISA/210 (second sheet) (July 2022)

## INTERNATIONAL SEARCH REPORT
### Information on patent family members

International application No.

**PCT/JP2023/046104**

| Patent document cited in search report | | | Publication date (day/month/year) | Patent family member(s) | | | Publication date (day/month/year) |
|---|---|---|---|---|---|---|---|
| JP | 2005-263521 | A | 29 September 2005 | (Family: none) | | | |
| WO | 2017/146044 | A1 | 31 August 2017 | US | 2019/0022624 | A1 | |
| | | | | paragraphs [0023]-[0116] | | | |
| | | | | US | 2021/0094016 | A1 | |
| | | | | US | 2023/0364582 | A1 | |
| | | | | EP | 3421425 | A1 | |
| | | | | CN | 108698833 | A | |
| | | | | CN | 111960400 | A | |
| | | | | JP | 2019-131460 | A | |
| | | | | JP | 2020-124710 | A | |
| | | | | JP | 2022-008312 | A | |
| | | | | JP | 2023-083296 | A | |
| JP | 2008-021966 | A | 31 January 2008 | US | 2009/0201630 | A1 | |
| | | | | paragraphs [0059], [0089] | | | |
| | | | | WO | 2007/145052 | A1 | |
| | | | | EP | 2031612 | A1 | |
| | | | | CN | 101356607 | A | |
| JP | 2016-150896 | A | 22 August 2016 | (Family: none) | | | |
| JP | 2017-222547 | A | 21 December 2017 | (Family: none) | | | |
| CN | 113277506 | A | 20 August 2021 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017146044 A

**Non-patent literature cited in the description**

- **MICROTRACBEL CORP.** BELSORP-mini and BEL-SORP analysis software manuals, 62-66
- **MICROTRACBEL CORP.** BELSORP-mini and BEL-SORP analysis software manuals, 62-65
- **MICROTRACBEL CORP.** *BELSORP-mini and BEL-SORP analysis software manuals*, 85-88